# EUROPEAN PATENT APPLICATION

(11) **EP 1 970 425 A1**
(43) Date of publication of application: **17.09.2008**
(21) Application number: 07102737.9
(22) Date of filing: 20.02.2007
(51) Int. Cl.: C10G 1/00, C10G 1/08, C10G 11/00

(54) **Improved process for converting carbon-based energy carrier material**

(71) Applicant: BIOeCON International Holding N.V., Curaçao (AN)
(72) Inventor: O'Connor, Paul, 3871 KM Hoevelaken (NL); Moulijn, Jacob Adriaan, 2517 HB Den Haag (NL)
(74) Representative: Rasser, Jacobus Cornelis

(57) **Abstract**

A catalytic process is disclosed for converting solid or high viscosity carbon-based energy carrier materials, such as heavy crudes, oil sands, synthetic polymeric wastes and cellulosic or aquatic biomass.

The conversion temperature is less than 450 °C. The reaction products are separated from the catalyst within 10 seconds after being formed. The temperature of the reaction products is lowered to less than 200 °C within 10 seconds after being formed.

The process results in less deterioration of the reaction products.

## Description

### BACKGROUND OF THE INVENTION

### 1. Field of the Invention

The present invention relates to a catalytic process of converting a carbon-based energy carrier material to a liquid or gaseous fuel.

### 2. Description of the Related Art

As the supply of light crude diminishes, alternate materials are being developed as a source of liquid and gaseous fuels. Alternate materials being considered include mineral energy carriers, such as heavy crudes, shale oils, tars (e.g., from tar sands) and bitumen.

Alternate materials further include waste supplies of synthetic resins. These synthetic resins may be virgin materials, for example rejects from molding and drawing operations, and used materials, such as recycled packaging materials.

Yet another, and potentially the most important, source of alternate carbon-based energy carrier material includes biomass, in particular biomass containing cellulose, lignin, and lignocellulose.

Processes have been developed for converting these materials to liquid and gaseous fuels. Catalysts have been proposed for use in such processes. Even when catalysts are used, however, the conversion reaction requires relatively high reaction temperatures, often in excess of 450 °C. Exposure of the reaction products to these reaction conditions results in a significant deterioration of the reaction products. As a result, valuable materials are converted to undesirable materials such as gas, char and coke, which foul and deactivate the catalyst particles and reduce the yield of the reaction process.

The present invention provides an improved process for converting a carbon-based energy carrier material to a liquid or gaseous fuel. The process is characterized in that the conversion temperature is less than 450 °C, preferably less than 400 °C, and in that the exposure time of reaction products to elevated temperatures and to contact with catalytic material is kept short.

### SUMMARY OF THE INVENTION

The present invention relates to a process for converting a solid or highly viscous carbon-based energy carrier material to liquid and gaseous reaction products, said process comprising the steps of:
a) contacting the carbon-based energy carrier material with a particulate catalyst material
b) converting the carbon-based energy carrier material at a reaction temperature between 200 °C and 450 °C, preferably between 250 °C and 350 °C, thereby forming reaction products in the vapor phase;
c) separating the vapor phase reaction products from the particulate catalyst material within 10 seconds after said reaction products are formed;
d) quenching the reaction products to a temperature below 200 °C.

### DETAILED DESCRIPTION OF PREFERRED EMBODIMENTS

The following is a description of certain embodiments of the invention, given by way of example only.

An important aspect of the present invention is the reaction temperature in step b) of less than 450 °C, preferably less than 400 °C. More preferably the reaction temperature is less than 350 °C, still more preferably less than 300 °C, and most preferably less than 250 °C. This reaction temperature is made possible by using a catalytic material selected from the group of cationic clays, anionic clays, natural clays, hydrotalcite-like materials, layered materials, ores, minerals, metal oxides, hydroxides and carbonates of the alkaline and alkaline earth metals, and mixtures thereof.

The catalyst particles are of a size suitable for heterogeneous catalysis. As a general rule, small catalyst particle sizes are preferred in heterogeneous catalysis, because the smaller a particle the greater the fraction of the available atoms that are present at the surface of the particle. Therefore, particle sizes of less than 100 microns are suitable, particles of less than 1,000 nanometers being preferred, particle sizes of less than 100 nm being more preferred. It has, however, been discovered that below a particle size of about 10 nm (the "Iglesia limit") many heterogeneous catalytic compounds lose their catalytic properties. For this reason catalytic particles having a particle size of less than 10 nm are not desirable. Another reason to avoid these very small particles is the potential health hazards related to the use of very fine nano particles.

The carbon-based energy carrier material may be from mineral, synthetic or biological origin. Materials from mineral origin include heavy crudes, shale oils, tars (e.g., from tar sands) and bitumen. Materials from synthetic origin include waste supplies of synthetic resins. These synthetic resins may be virgin materials, for example rejects from molding and drawing operations, and used materials, such as recycled packaging materials. Materials from biological origin include biomass, in particular solid biomass containing cellulose, lignin, and lignocellulose. A preferred biomass is biomass of aquatic origin, such as algae.

The carbon-based energy carrier material is either a viscous liquid or a solid, making it difficult to establish an intimate contact between the carbon-based energy carrier material and the particulate catalyst material. It may be necessary to mill the carbon-based energy carrier material together with the particulate catalyst material. In a preferred embodiment of the process, the particulate catalyst material may be "sand blasted" onto the carbon-based energy carrier material. For this purpose the particulate catalyst material is taken up in a stream of inert gas, and the inert gas is caused to flow, e.g., by means of a compressor. In his manner the catalyst particles are given a velocity of at least 1 m/s, preferably at least 10 m/s.

The stream of gas is then impinged upon the carbon-based energy carrier material. Due to their kinetic energy the catalyst particles penetrate the carbon-based energy carrier material, thereby providing the necessary intimate contact.

The sand blasting of particles onto the carbon-based energy carrier material causes mechanical breakup of the latter, which is of particular advantage if this material is a solid. The effect can be reinforced by mixing the catalyst particles with particulate inert material. Preferably the inert material has a particle size similar to that of the catalyst material.

In a particularly preferred embodiment of the process, step a) is carried out in a chemical reactor, such as a fluidized bed reactor, a riser reactor, or a downer reactor. Conveniently, step b) may be carried out in the same reactor as step a).

In step b) reaction products are formed having molecular weights such that these products are in gas or liquid form when at room temperature. At the reaction temperature these reaction products are all in the gas form, which is referred to herein as "reaction products in the vapor phase". It is an important aspect of the present invention that the reaction products in the vapor phase are quickly separated from the particulate catalyst material. Specifically, the reaction products in the vapor phase are separated from the catalyst particles within 10 seconds after they are formed, preferably within 5 seconds, more preferably within 3 seconds. The reaction products generally comprise hydrocarbons and steam.

This separation may be accomplished by applying reduced pressure to the zone of the reactor where this separation takes place. Preferably the reduced pressure is a "vacuum" of less than 500 mBar.

This rapid separation of the reaction products from the catalyst material is an important factor in limiting the degradation of the reaction products. Degradation can be diminished further by rapidly cooling the reaction products after they are separated from the catalyst material. If the separation step involves applying reduced pressure, some cooling of the reaction products will occur as a result of their adiabatic expansion. Further cooling may be accomplished by any means known in the art, for example by pumping the reaction products through a heat exchanger in counter-flow with a cooling medium, such as chilled water.

Preferably, the reaction products are cooled to a temperature below 200 °C, preferably below 150 °C, within 10 seconds, preferably within 3 seconds, after being separated from the catalytic material.

Some reaction products remain adsorbed to the catalyst particles after separating step c). These materials may be removed by stripping, using methods well known in the art. For example, stripping conditions as used in FCC units are suitable. Although the reaction products removed by stripping may have been in contact with the catalyst material longer than the desired 10 seconds, these materials are not necessarily fully deteriorated.

During the reaction coke may form on the catalyst surface. This coke can be burned off by exposing the catalyst to an oxidative environment, such as air, at elevated temperature. This optional step may be carried out in a regenerator of the type known from FCC processes.

This burning-off step results in the production of CO₂. In a preferred embodiment this CO₂ is used in the production of biomass, for example by spraying it onto crops or trees under conditions that are favorable for photosynthesis. In a particularly preferred embodiment the CO₂ is used in the production of aquatic biomass, for example by bubbling it through a pond in which algae are grown.

The heat generated during the optional regeneration step may be used to supply the heat for the endothermic reaction of step b). To this end, hot catalyst particles from the regenerator are recycled to step a) or b) of the process. The amount of coke deposit may be such that the amount of heat generated during the regeneration step may be greater than what is need for fueling the conversion reaction. If this is the case, excess heat may be removed from the process by cooling the catalyst particles to a desired temperature prior to recycling them into the reactor. The desired temperature is determined by the heat balance for the process, and the desired reaction temperature for step b). Accordingly, the desired temperature of the catalyst particles just prior to recycle may be determined in a manner similar to that used in FCC processes.

If heat is removed from the regenerated catalyst particles, this heat may be used for generating steam, hot water, or electricity.

In a preferred embodiment the process is carried out in an FCC unit. It may be desirable to carry out step a) in a pretreatment reactor, prior to introduction of the carbon-based energy carrier material into the riser of the FCC unit.

In a preferred embodiment of the invention a reactive gas is present during at least part of step b). This reactive gas may have oxidative or reductive properties, or the reactive gas may be reactive in isomerisation or alkylation properties. Examples of reactive gases having oxidative properties include air and oxygen, as well as mixtures of oxygen and an inert gas such as nitrogen.

Examples of gases having reductive properties include carbon monoxide, hydrogen sulfide, and hydrogen. Hydrogen may be less preferred, as it may require a high pressure.

Gases having alkylation or isomerisation properties include iso-butane, naphtene, volatile organic acids, and the like.

Thus, the invention has been described by reference to certain embodiments discussed above. It will be recognized that these embodiments are susceptible to various modifications and alternative forms well known to those of skill in the art.

## Claims

1. A process for converting a solid or highly viscous carbon-based energy carrier material to liquid and gaseous reaction products, said process comprising the steps of:
a) contacting the carbon-based energy carrier material with a particulate catalyst material
b) converting the carbon-based energy carrier material at a reaction temperature between 200 °C and 450 °C, thereby forming reaction products in the vapor phase;
c) separating the vapor phase reaction products from the particulate catalyst material within 10 seconds after said reaction products are formed;
d) optionally quenching the reaction products to a temperature below 200 °C.

2. The process of claim 1 comprising the additional step of stripping reaction products from the particulate catalyst material.

3. The process of claim 1 or 2 comprising the additional step of burning off any coke formed on the particulate catalyst material.

4. The process of claim 2 or 3 comprising the further step of recycling the particulate catalyst material to step a) or b).

5. The process of any one of the preceding claims whereby a reactive gas is present during step b).

6. The process of claim 5 wherein the reactive gas has oxidative or reductive properties.

7. The process of claim 5 wherein the reactive gas is reactive in isomerisation or alkylation reactions.

8. The process of claim 6 wherein the reactive gas comprises oxygen, hydrogen, hydrogen sulfide, or carbon monoxide.

9. The process of claim 7 wherein the reactive gas comprises iso-butane, naphtene, or a volatile organic acid.

10. The process of any one of the preceding claims wherein the catalytic material comprises cationic clays, anionic clays, natural clays, hydrotalcite-like materials, layered materials, ores, minerals, metal oxides, hydroxides and carbonates of the alkaline and alkaline earth metals, or mixtures thereof.

11. The process of any one of the preceding claims wherein the carbon-based energy carrier material is of mineral origin.

12. The process of claim 11 wherein the carbon-based energy carrier material is a tar, a heavy crude, or a bitumen.

13. The process of any one of claims 1 through 10 wherein the carbon-based energy carrier material is a synthetic polymer.

14. The process of any one of claims 1 through 10 wherein the carbon-based energy carrier material is a solid biomass.

15. The process of claim 14 wherein the solid biomass comprises cellulose, lignin, or lignocellulose.

16. The process of claim 14 wherein the solid biomass is of aquatic origin.

17. The process of any one of claims 3 - 16 whereby the CO₂ is utilized in the production of biomass.

18. The process of claim 17 whereby the CO₂ is utilized in the production of aquatic biomass.

19. The process of any one of the preceding claims wherein step a) comprises milling of the carbon-based energy carrier material in the presence of the particulate catalyst material.

20. The process of any one of the preceding claims wherein step a) comprises the steps of:
(i) taking up the particulate catalyst material in a stream of a carrier gas;
(ii) causing the gas stream to flow such that the particulate catalyst material reaches a velocity of at least 1 m/s, preferably at least 10 m/s
(iii) impinging the catalyst particles onto the carbon-based energy carrier material.

21. The process of claim 17 wherein the carrier gas further comprises a particulate inert material.

22. The process of claim 17 or 18 wherein step a) is carried out in a fluidized bed, a riser reactor, or a downer reactor.

23. The process of any one of the preceding claims wherein the reaction temperature in step b) is less than 350 °C, preferably less than 300 °C, more preferably less than 250 °C.

24. The process of any one of the preceding claims wherein the vapor phase reaction products comprise steam, hydrocarbons, or a mixture thereof.

25. The process of claim 3 wherein the coke is burned off with air.

26. The process of claim 3 or 22 comprising the further step of cooling the particulate catalyst material after the coke has been burned off.

27. The process of claim 23 whereby heat recovered from the particulate catalyst material is used for generating steam, hot water, or electricity.

28. The process of any one of the preceding claims whereby at least step b) is carried out in an FCC unit.

29. The process of any one of the preceding claims whereby at least step b) is carried out in a downer.
